(19) Europäisches Patentamt / European Patent Office / Office européen des brevets

(11) EP 2 429 132 B1

(12) EUROPEAN PATENT SPECIFICATION

(45) Date of publication and mention
of the grant of the patent:
**17.07.2019 Bulletin 2019/29**

(51) Int Cl.:
*G06F 16/901* (2019.01)  *H04L 12/745* (2013.01)
*H04L 12/743* (2013.01)  *H04L 12/741* (2013.01)

(21) Application number: **09844288.2**

(22) Date of filing: **06.11.2009**

(86) International application number:
**PCT/CN2009/074855**

(87) International publication number:
**WO 2010/127536 (11.11.2010 Gazette 2010/45)**

(54) **TABLE CREATING AND SEARCHING METHOD USED BY NETWORK PROCESSOR**

VON EINEM NETZWERKPROZESSOR VERWENDETES TABELLENERZEUGUNGS- UND
DURCHSUCHUNGSVERFAHREN

PROCÉDÉ DE CRÉATION ET DE RECHERCHE DE TABLE UTILISÉ PAR UN PROCESSEUR DE
RÉSEAU

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **04.05.2009  CN 200910106953**

(43) Date of publication of application:
**14.03.2012  Bulletin 2012/11**

(73) Proprietor: **ZTE Corporation
Shenzhen, Guangdong 518057 (CN)**

(72) Inventor: **LIANG, Xiushuai
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
EP-A2- 1 113 372      WO-A1-01/37495
CN-A- 1 691 523       CN-A- 101 021 814
CN-A- 101 350 788     US-A- 6 052 683
US-A- 6 061 679       US-B1- 6 675 163

- **BUTLER LAMPSON ET AL: "IP Lookups Using Multiway and Multicolumn Search", IEEE / ACM TRANSACTIONS ON NETWORKING, IEEE / ACM, NEW YORK, NY, US, vol. 7, no. 3, 1 June 1999 (1999-06-01), XP011039205, ISSN: 1063-6692**
- **PEI T-B ET AL: "VLSI implementation of routing tables: tries and CAMs", NETWORKING IN THE NINETIES. BAL HARBOUR, APR. 7 - 11, 1991; [PROCEEDINGS OF THE ANNUAL JOINT CONFERENCE OF THE COMPUTER AND COMMUNICATIONS SOCIETIES. (INFOCOM)], NEW YORK, IEEE, US, vol. CONF. 10, 7 April 1991 (1991-04-07), pages 515-524, XP010042438, DOI: 10.1109/INFCOM.1991.147548 ISBN: 978-0-87942-694-1**

**Description**

**Field of the Invention**

The present invention relates to the field of network communication, and in particular to a table creating and lookup method used by a network processor.

**Description of the Related Art**

With the development of information technology, the amount of data services is becoming increasingly large, and the processes of different data protocols and data types are becoming more and more complicated. Thereby it is required that a network node has the capacity of flexibly processing data services. The current network processor, which can establish service process flows according to demands, has advantages such as flexibility of realization, facility of updating and a short development period, compared with the existing service chip. Thus it has been widely used in recent years.

The data process of the network processor generally comprises several steps: packet classification, speed limitation, traffic management and shaping, message modification and the like. During the processing, the network processor needs to acquire information from data packet, lookups the table after acquiring the information from the data packet, and judge how to process the data packet according to the result of looking up the table. Generally, during the data process, several tables need to be looked up depending on different service complexities. If it takes relatively long time to lookup the table, the processing efficiency of the network processor will be affected, and result in the decrease of its performance. The factors which affect efficiency of looking up the table are mainly in two aspects wherein one aspect is the table design, i.e., the table creating method, that is what form the list items are stored in; and the other aspect is the method of looking up a table, that is what method is used to match input items with items existing in the table.

The method of the current network processor for designing and looking up a table comprises the following.

(1) A Full-Match lookup algorithm, in which the input Key is calculated by using Hash function, the tree table is looked up until finding the leaf, key value and relative information which are all contained in the Patricia Trees, and the Hash function is used for performing the "n to n" conversion from the key bit to Hash key.

(2) A longest matching algorithm, in which one bit is compared each time until an accurate matching item is found, and it is necessary to make the comparison for n times to identify if it is the most matched item. Regardless of the Most Accurate Match or the Longest Prefix Match, it is assured that the table creating has only one best match.

(3) An algorithm in which the longest match is searched by using Hash function, the Hash is performed on the first part of the network protocol address, which is mapped to a VPN number, and the VPN number, in combination with the remaining part of the IP address, function as the input key. Then the comparison is made one by one.

(4) An algorithm in which data table processing is performed with multi-level storage, the tree to be visited is stored in the memory according to classification, the data of the first part of the data table is stored in the first memory level, the data of the second part is stored in the second memory level, and so forth. When looking up the table, the processor determines one or more matching items which would be stored between the memory level and the input searching items through one or more parts stored in the memory level. The processor, the first memory level and the second memory level are embodied in one integrated circuit, while the third memory level is embodied outside this integrated circuit.

As mentioned above, in existing technologies, the lookup of the table is performed by comparing bits one by one, or by calculating the value Key with the Hash algorithm, or by the combination of the above-mentioned methods, or by creating table and looking up table by grading. As for the method of comparing the bits one by one, when the number of the bits matched is large, the number of the comparisons is large; while as for the method of matching with the hash algorithm, the conflicts may occur and the performance may be reduced easily.

If the number of the bits of the compared object are used as a value to perform the matching, or the hash calculation, or the matching is conducted among list items with the same bit length, then number of the comparisons can be reduced in the lengthened lists, and the problems in existing technologies can be solved.

The matching length herein refers to the matching byte length of the items of tree table or the input field length to be matched, for example, the list item of a table with 16bit at the longest: 0101001110******, wherein the matching length is 10 bits, and 6 bits are wildcards. If the field to be input is: 10101010********, the field to be matched is 10101010, and the matching length thereof is 8 bits.

The patent document US6061679A relates to a method for creating a data structure in a computing environment.

The patent document US6052683A relates to an apparatus for performing an address lookup to find a longest matching prefix for an N-bit input address in a packet data communication system.

The patent document WO01/37495A1 relates to a table lookup indexing system for the transmission of data packets in a network switch.

The patent document US6675163B1 relates to a novel data structures, methods and apparatus for finding a full match between a search pattern and a pattern stored in a leaf of the search tree.

The patent document EP1113372A2 relates to a multi-way tree data structure supporting a longest match lookup.

The non-patent document "IP Lookups Using Multiway and Multicolumn Search" relates to an IP lookups using multiway and multicolumn search.

The non-patent document "VLSI implementation of routing tables: tries and CAMs" relates to routing tables for communication networks.

## Summary of the Invention

The object of the present invention is to disclose a table creating and lookup method used by a network processor, to overcome shortcomings in existing technologies, simplify the table lookup process of the network processor, improve the processing capability of the network processor and has significant effects especially for the tables with unfixed matching byte lengths.

A table creating method used by the network processor is disclosed in the present invention, which is used for configuring list items, wherein storage index values are calculated according to the matching bit lengths and matching bit values of the above list items, and storage areas of the above list items are determined according to the storage index values.

The table creating method used by the network processor disclosed in the present invention further comprises the following dependent technical features: The above-mentioned method for calculating the storage index values uses a partial-mapping algorithm, full-mapping algorithm; or the Hash function for calculation;

Determining the storage areas of the list items according to the storage index values mentioned above comprises: determining the storage areas according to the matching bit lengths of the list items, and determining the storage positions of the list items with the same matching bit length in the same storage area according to the matching bit values;

Supposing N is a storage index value of at least one list item, an equation for calculating the above-mentioned storage index values is as follows:

$$N = X/M + (S-1)$$

wherein, X is the matching bit value of the at least one list item; M is a constant; and S is the matching bit length of the at least one list item. The value of the constant M is 1024.

A table lookup method used by the network processor is also disclosed in the present invention, which is used for matching list items, wherein index values of corresponding list items are calculated according to the matching bit lengths and matching bit values of input fields; and list items with the same index value are looked up in the storage areas of the lists mentioned above according to the index values of the corresponding list items; wherein the input fields are compared with the list items with the same index value one by one, wherein if there are full-matched list items, then "lookup is finished" is returned, otherwise "the lookup is failed" is returned.

The table lookup method used by the network processor disclosed in the present invention further comprises the following dependent technical features.

The above-mentioned method for calculating the index values of corresponding list items uses a partial-mapping algorithm or use a full-mapping algorithm; or the Hash function for calculation;

The index values of corresponding list items are the matching bit lengths and the matching bit values of the input fields;

The lookup of list items with the same index value mentioned above comprises: determining storage areas of the list items according to the matching bit lengths of the above input fields, and determining storage positions of the list items with the same matching bit length in the same storage area according to the matching bit values of the input fields;

Supposing N is a index value of at least one corresponding list item, an equation for calculating the index values of the corresponding list items is as follows:

$$N = X/M + (S-1)$$

wherein, X is the matching bit value of aforesaid at least one list item; M is a constant; and S is the matching bit length of aforesaid at least one list item. The value of the constant M is 1024.

In the method of the network processor for creating and looking up a table disclosed by the present invention, the number of the bits of the list items is used as a value to performing matching, or perform the hash calculation, or the matching is conducted among list items with the same bit length, which reduces the number of the comparisons in the lengthened lists, optimizes the table structure of the network processor, achieves the storage and efficient table lookup of the network processor, simplifies the table lookup process of the network processor, and improves the processing capability of the network processor.

## Brief Description of the Drawings

The drawings illustrated here provide a further understanding of the present invention, and constitute a part of this application. The exemplary embodiments of the present invention and the description thereof are used to explain the present invention without unduly limiting the scope of the present invention, wherein

Fig.1 is a flow chart of the method of a network processor for creating and looking up a table according to the embodiment of the present invention;

Fig.2 is a schematic diagram of a storage structure of the table of the network processor according to the embodiment of the present invention;

Fig.3 is a schematic diagram of one embodiment of a table storage structure and the table lookup method thereof according to the present invention;

Fig.4 is a schematic diagram of another storage structure of the table of the network processor according to the embodiment of the present invention; and

Fig.5 is a schematic diagram of one embodiment of another table storage structure and the table lookup method thereof according to the present invention.

**Detailed Description of the Embodiments**

Hereinafter the present invention will be described in detail with reference to the drawings and in combination with the embodiments. It should be noted that, when no conflicts occur, the embodiments of the present application and their features can be combined with each other.

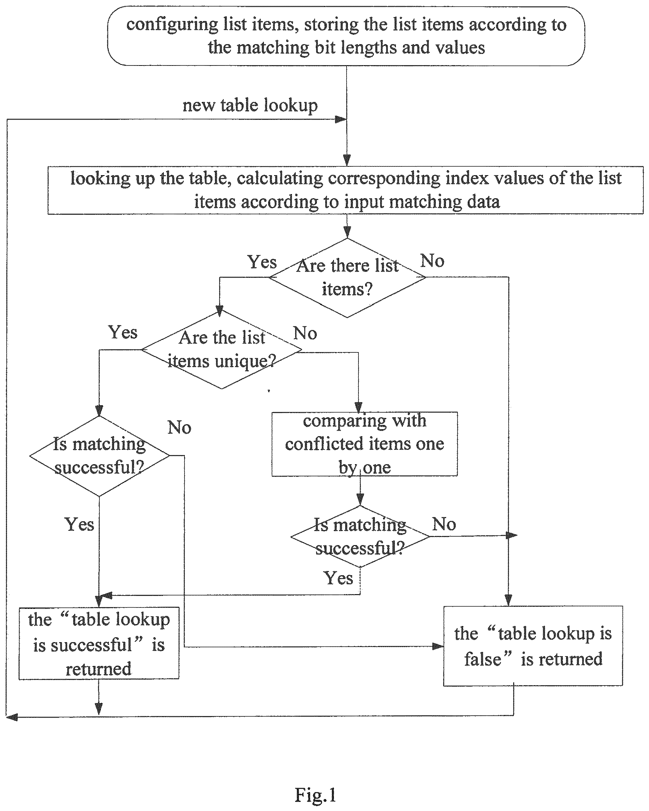

Fig.1 is a flow chart of the method of a network processor for creating and looking up a table according to the embodiment of the present invention. As shown in Fig.1, the methods of a network processor for creating and looking up a table according to the embodiment of the present invention mainly comprise the following steps:

creating firstly a table, comprising configuring list items, that is, storing the list items according to the matching bit lengths and the matching bit values.

When receiving a request instruction for table lookup, index values of corresponding list items are calculated according to the input matching data. To calculate the index values, a full-mapping algorithm, or a partial-mapping algorithm (for example, Hash algorithm) may be used.

It is judged if there are corresponding list items in the table according to the index values of the list items. If there is not corresponding list item in the table, then the sign of "the table lookup is failed" is returned and this table lookup is finished, and a new request for the table lookup is waited for.

If there is corresponding list item in the table, then it is further judged if the corresponding list item is unique. If the corresponding list item is unique, then further the bits are compared one by one and it is judged if the matching is successful. If the matching is successful, then the sign of "the table lookup is successful" is returned and this table lookup is finished and a new request for the table lookup is waited for. If the matching is unsuccessful, then the sign of "the table lookup is failed" is returned and this table lookup is finished, and a new request for the table lookup is waited for.

If the corresponding list item is non-unique, then the input matching data is compared with the conflicting items one by one, bit by bit. If the matching is unsuccessful, then the sign of "the table lookup is failed" is returned and this table lookup is finished, and a new request for the table is waited for. If the matching is successful, then the sign of "the table lookup is successful" is returned and the table lookup is finished and a new request for the table lookup is waited for.

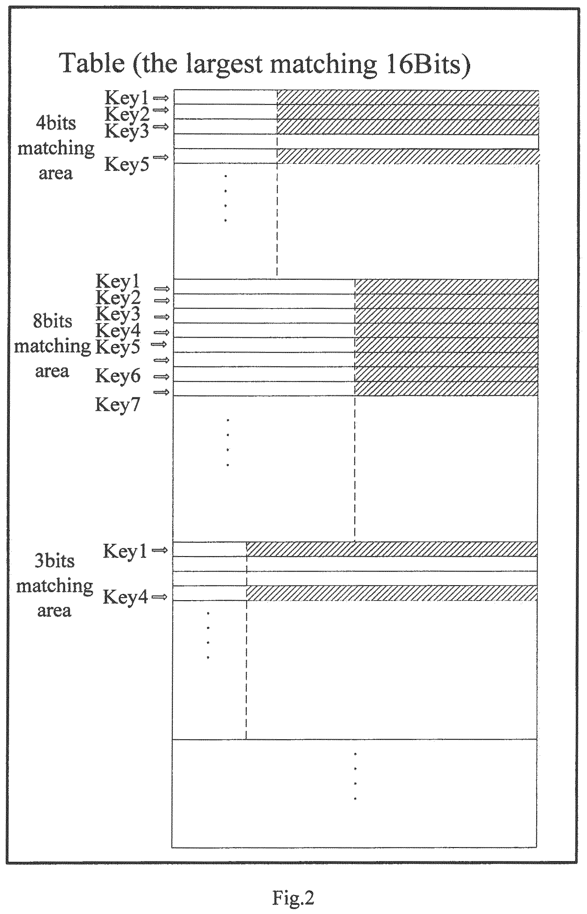

Fig.2 is a schematic diagram of a table storage structure of the network processor according to the embodiment of the present invention. As shown in Fig.2, the list items with different matching lengths are stored in different areas. The table with the largest matching length of 16 bits is shown in the Figure. The list items with different matching lengths are stored in different areas, wherein the matching areas of 4 bits, 8 bits and 3 bits are shown in the Figure.

Key is used for indicating an index value in Fig.2. Key1 and Key2 are used to distinguish different indexes. As for the list items with matching length less than 8, they are correspondingly stored with the matching bit values as area index values, subtracting the value of Key by one (Key-1) corresponds to the area index value. The values of Indexes are the index values. For example, in the matching area of 4 bits, the storage positions of 0000, 0001, 0010 and 0100 correspond to 0, 1, 2 and 4 respectively. When the matching length is equal or greater than 8, then the hash mapping is performed by dividing the matching bit values of the list items by 128. In the area of 8 bits, the index 5 corresponds to two list items, which are conflicted items. The so-called matching bit values of the list items are the values corresponding to bits of the matching lengths, for example, the matching value of 011** is 011, and the corresponding decimal value is 3.

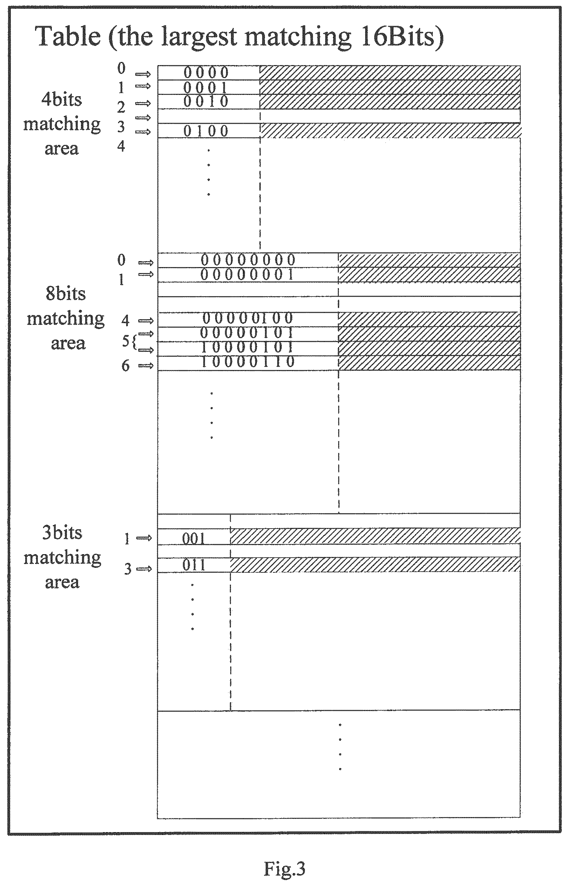

Fig.3 is a schematic diagram of one embodiment of a table storage structure and the table lookup method thereof according to the present invention. As shown in Fig.3, the table storage structure shown in the figure is the embodiment of the table storage structure in Fig.2. Hereinafter, with two input values respectively being 00000001******** and 00000101******** as an example, the table lookup process of the present invention is described as follows:

1. it is determined to look up the 8bit area of the table according to the input matching lengths;

2. it is determined that the two input hash values are 1 and 5 respectively according to the mapping algorithm wherein the mapping algorithm is to perform hash mapping by dividing the matching bit values of the list items by 128;

3. the hash value 1 has corresponding a list item which matches with the input, and then the "table lookup is successful" is returned.

4. the hash value 5 has two list items, the list items are compared one by one, and then the "table lookup is successful" is returned.

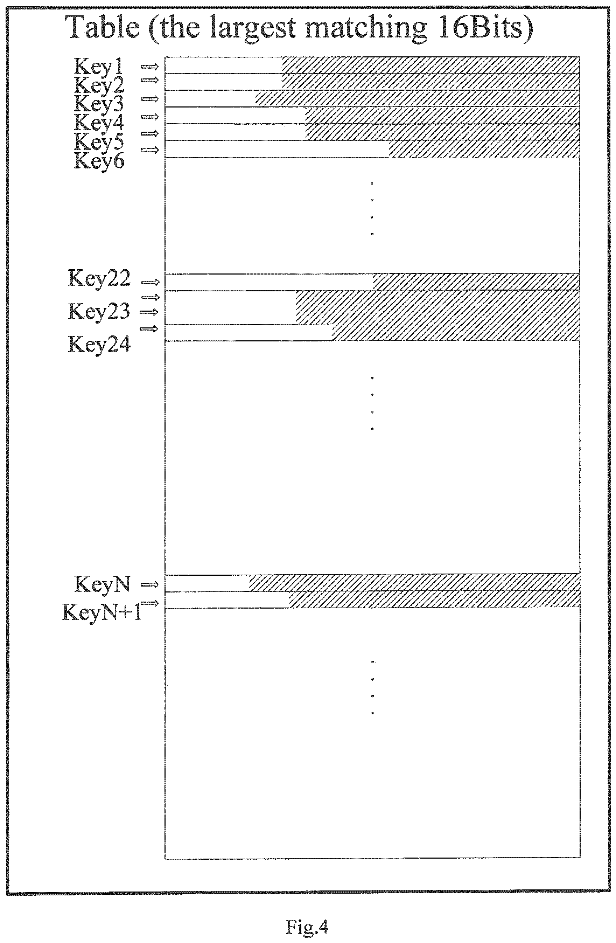

Fig.4 is a schematic diagram of another storage structure of the table of the network processor according to the embodiment of the present invention. As shown in Fig.4, according to the matching length and the matching value, the index is calculated to store the list items. The figure shows the table with the largest matching length of 16 bits, wherein the list items are stored sequentially depending on the matching lengths and the matching values, the list items with the same matching length are stored collectively, wherein the list items with the same matching length are further stored sequentially depending on the matching values. Similarly, during looking up the table, the storage positions of the list items are judged according to the calculation of the matching lengths and the matching values.

In this embodiment, the storage positions of the list items are calculated by the Hash function as follows:

$$N=X/M+(S-1)$$

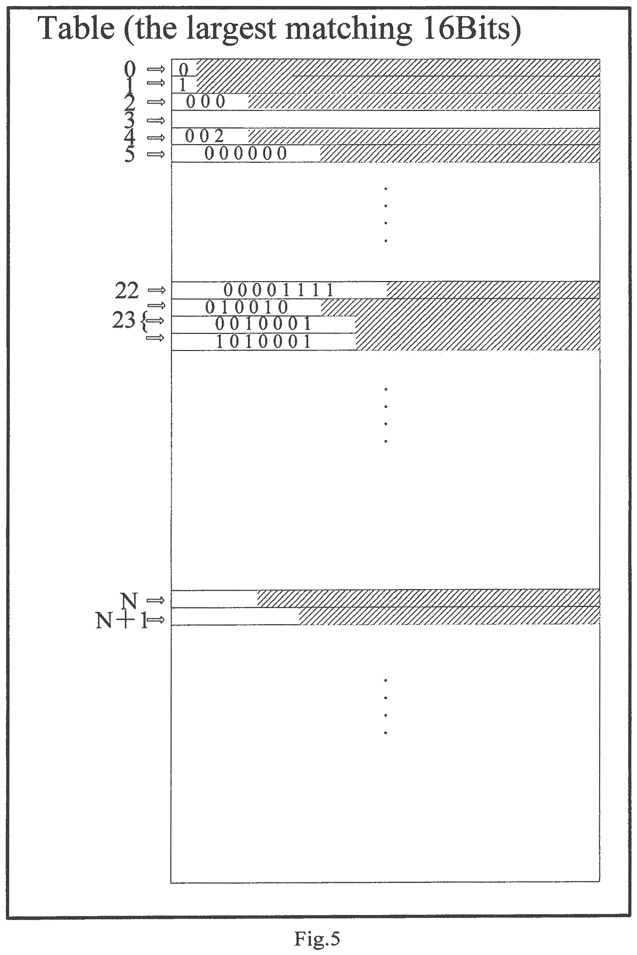

wherein, N is the storage position of a list item; X is the matching value of the list item; M is a constant, wherein M=1024; and S is the matching length. The list items calculated by the function is shown in Fig.5, wherein the index 23 corresponds to three list items, which are conflicted items.

Fig.5 is a schematic diagram of one embodiment of a table storage structure and the table lookup method thereof according to the present invention. As shown in Fig.5, the embodiment of the table storage structure in Fig.4 is shown. Hereinafter with the input values of 001************* and 10010********** as an example, the table lookup process according to the present invention will be discribed.

When the input value is 001*************, the corresponding N equals to 3; X equals to 1; and S equals to 3.

1. the index values of the input field are calculated respectively according to the input matching lengths and the matching values. After the calculation, the corresponding index values of the two input values are 3 and 23 respectively.

2. the table is looked up according to the index values, the index value 3 in Fig.5 has no corresponding list item, and then the sign of "the lookup is failed" is returned.

3. The index value 23 in Fig.5 corresponds to several list items, and then comparison is made one by one. After the comparison, there is no items in the table corresponding to 10010**********, and then the sign of "the lookup is failed" is returned.

In the table creating method used by the network processor disclosed in the present invention, the storage positions of the list items are determined in combination with the matching lengths during configuring the list items, with two following processing methods.

(1) The matching bit lengths and the matching bits of the list items are used as Key values to calculate the index values of the list items, these list items are stored in the table in corresponding positions by using the index values, wherein the Hash function is used in the calculation.

(2) The list items with the same matching length are stored in the same area, and the indexes of the list items in the same area are obtained through calculation with certain algorithm, which may use the Hash function.

When looking up the table, according to the matching lengths of the input fields, there are two lookup methods corresponding to configuring the list items.

(1) According to the matching lengths and the matching bits which are input for looking up the table, the index values are calculated by using the same algorithm as configuring the list items, the list items are looked up according to the index values.

(2) Firstly, the areas in the table corresponding to the list items are determined according to the matching lengths for looking up the table, and then the index values are calculated for the lookup according to the matching bit values.

The table creating and lookup method used by the network processor in the present invention will be described in detail hereinafter.

The First Step

the list items are configured, the storage positions of the list items are determined according to the matching bit lengths of the list items to be configured and the matching bit values, which particularly comprises two methods:

(1) storing the list items with different matching lengths into different areas of the table, wherein firstly the storage areas of the list items according to the matching bit lengths is determined, and then storage positions of the list items in the areas are calculated according to the matching bit values wherein the calculation can be made by using Hash function.

(2) directly storing the list items by using the index values, wherein the storage index values are calculated according to the matching bit lengths and the matching bit values, and after the index values of the list items are obtained, the list items are stored in the table wherein the calculation can be made by using Hash function.

The Second Step

When looking up the table according to the input fields, there are two lookup methods corresponding to the configuration of the lists according to the input matching lengths.

(1) according to the matching length values which are input for looking up the table, the area in the table corresponding the input is determined, and then the corresponding positions in the area are calculated according to the matching length values.

(2) according to the matching length values and the matching bit values which are input for looking up the table, one index value is calculated with the same calculation method as the storing of the list items.

The Third Step

The index value in the Second Step is used for looking up the table, wherein if the table has no table item corresponding to the index value, then the lookup is failed; otherwise the Forth Step is excuted.

The Forth Step

If the index value corresponds to a unique list item, and the matching is consistent, then the lookup is finished; otherwise the Fifth Step is excuted.

The Fifth Step

If the index value corresponds to several list items, then these list items are matched with the input one by one, wherein if the matching bits are matched fully, then the lookup is finished, otherwise the lookup is failed.

**Claims**

1. A table creating and lookup method used for configuring list items and matching list items by a network processor, **characterized in that** the method comprises:

the steps of calculating storage index values according to matching bit lengths and matching bit values of the list items, and determining storage areas of the list items according to the storage index values;
calculating index values of corresponding list items according to the matching bit lengths and matching bit values of input fields, and looking up list items with the same index value in storage areas of the table according to the index values of the corresponding list items; wherein the input fields are compared with the list items with the same index value one by one, wherein if there are full-matched list items, then "lookup is finished" is returned, otherwise "the lookup is failed" is returned;
wherein the storage index values are calculated with following equation:

$$N=X/M+(S-1)$$

N is a storage index value of at least one list item, X is the matching bit value of the at least one list item, M is a constant, and S is the matching bit length of the at least one list item.

2. The table creating and lookup method according to claim 1, **characterized in that** the step for calculating the storage index values comprises calculating the storage index values through partial-mapping algorithm, full-mapping algorithm, or Hash function.

3. The table creating and lookup method according to claim 1, **characterized in that** the step of determining storage areas of the list items according to the storage index values comprises: determining the storage areas according to the matching bit lengths of the list items, and determining the storage positions of the list items with the same matching bit length in the same storage area according to the matching bit values.

4. The table creating and lookup method according to claim 1, **characterized in that** the step for calculating the index values of corresponding list items comprises calculating the index values of corresponding list items through partial-mapping algorithm, full-mapping algorithm, or Hash function.

5. The table creating and lookup method according to claim 1, **characterized in that** the index values of corresponding list items are the matching bit lengths and the matching bit values of the input fields, and the lookup of list items with the same index value comprises: determining storage areas of the list items according to the matching bit lengths of input fields, and determining storage positions of the list items with the same matching bit length in the same storage area according to the matching bit values of the input fields.

6. The table creating and lookup method according to claim 4, **characterized in that** the index values of corresponding list items are calculated with following equation:

$$P=T/M+(Y\text{-}1)$$

wherein, P is an index value of at least one corresponding list item, T is the matching bit value of the at least one input field, M is a constant, and Y is the matching bit length of the at least one input field.

7. The table creating and lookup method according to claim 1 or 6, **characterized in that** the value of the M is 1024.


**Patentansprüche**

1. Tabellenerzeugungs- und Nachschlageverfahren, das von einem Netzwerkprozessor dafür verwendet wird, Listenelemente zu konfigurieren und Listenelemente abzugleichen, **dadurch gekennzeichnet, dass** das Verfahren umfasst: die Schritte des Berechnens von Speicherindexwerten gemäß übereinstimmenden Bitlängen und übereinstimmenden Bitwerten der Listenelemente, und Bestimmens von Speicherbereichen der Listenelemente gemäß den Speicherindexwerten;
Berechnens von Indexwerten von entsprechenden Listenelementen gemäß den übereinstimmenden Bitlängen und übereinstimmenden Bitwerten von Eingabefeldern, und Nachschlagens von Listenelementen mit dem gleichen Indexwert in Speicherbereichen der Tabelle gemäß den Indexwerten der entsprechenden Listenelemente; wobei die Eingabefelder einzeln mit den Listenelementen mit demselben Indexwert verglichen werden, wobei, wenn es vollständig übereinstimmende Listenelemente gibt, dann "Nachschlagen ist abgeschlossen" zurückgegeben wird, andernfalls "Das Nachschlagen ist fehlgeschlagen" zurückgegeben wird;
wobei die Speicherindexwerte mit folgender Gleichung berechnet werden:

$$N=X/M+(S\text{-}1)$$

N ein Speicherindexwert von mindestens einem Listenelement ist, X der übereinstimmende Bitwert des mindestens einen Listenelements ist, M eine Konstante ist, und S die übereinstimmende Bitlänge des mindestens einen Listenelements ist.

2. Tabellenerzeugungs- und Nachschlageverfahren nach Anspruch 1, **dadurch gekennzeichnet, dass** der Schritt zum Berechnen der Speicherindexwerte das Berechnen der Speicherindexwerte über Partial-Mapping-Algorithmus, Full-Mapping-Algorithmus, oder Hash-Funktion umfasst.

3. Tabellenerzeugungs- und Nachschlageverfahren nach Anspruch 1, **dadurch gekennzeichnet, dass** der Schritt des Bestimmens von Speicherbereichen der Listenelemente gemäß den Speicherindexwerten umfasst: Bestimmen der Speicherbereiche gemäß den übereinstimmenden Bitlängen der Listenelemente, und Bestimmen der Speicherpositionen der Listenelemente mit derselben übereinstimmenden Bitlänge in demselben Speicherbereich gemäß den übereinstimmenden Bitwerten.

4. Tabellenerzeugungs- und Nachschlageverfahren nach Anspruch 1, **dadurch gekennzeichnet, dass** der Schritt zum Berechnen der Indexwerte von entsprechenden Listenelementen das Berechnen der Indexwerte von entsprechenden Listenelementen über Partial-Mapping-Algorithmus, Full-Mapping-Algorithmus, oder Hash-Funktion umfasst.

5. Tabellenerzeugungs- und Nachschlageverfahren nach Anspruch 1, **dadurch gekennzeichnet, dass** die Indexwerte von entsprechenden Listenelementen die übereinstimmenden Bitlängen und die übereinstimmenden Bitwerte der Eingabefelder sind, und das Nachschlagen von Listenelementen mit demselben Indexwert umfasst: Bestimmen von Speicherbereichen der Listenelemente gemäß den übereinstimmenden Bitlängen von Eingabefeldern, und Bestimmen von Speicherpositionen der Listenelemente mit derselben übereinstimmenden Bitlänge in demselben Speicherbereich gemäß den übereinstimmenden Bitwerten der Eingabefelder.

6. Tabellenerzeugungs- und Nachschlageverfahren nach Anspruch 4, **dadurch gekennzeichnet, dass** die Indexwerte von entsprechenden Listenelementen mit folgender Gleichung berechnet werden:

$$P=T/M+(Y-1)$$

wobei P ein Indexwert von mindestens einem entsprechenden Listenelement ist, T der übereinstimmende Bitwert des mindestens einen Eingabefelds ist, M eine Konstante ist, und Y die übereinstimmende Bitlänge des mindestens einen Eingabefelds ist.

7. Tabellenerzeugungs- und Nachschlageverfahren nach Anspruch 1 oder 6, **dadurch gekennzeichnet, dass** der Wert des M 1024 beträgt.

**Revendications**

1. Procédé de création et de recherche de table utilisé pour configurer des éléments de liste et mettre en correspondance des éléments de liste par un processeur de réseau, **caractérisé en ce que** le procédé comprend :

> les étapes consistant à calculer des valeurs d'indice de stockage selon des longueurs de bits de mise en correspondance et des valeurs de bits de mise en correspondance des éléments de liste, et déterminer des zones de stockage des éléments de liste selon les valeurs d'indice de stockage ;
> calculer des valeurs d'indice d'éléments de liste correspondants selon les longueurs de bits de mise en correspondance et les valeurs de bits de mise en correspondance de champs d'entrée, et rechercher des éléments de liste avec la même valeur d'indice dans des zones de stockage de la table selon les valeurs d'indice des éléments de liste correspondants ; dans lequel les champs d'entrée sont comparés un à un aux éléments de liste avec la même valeur d'indice, dans lequel s'il y a des éléments de liste totalement mis en correspondance, alors « recherche est finie » est renvoyé, sinon « la recherche a échoué » est renvoyé ;
> dans lequel les valeurs d'indice de stockage sont calculées avec l'équation suivante :

$$N=X/M+(S-1)$$

> N est une valeur d'indice de stockage d'au moins un élément de liste, X est la valeur de bits de mise en correspondance de l'au moins un élément de liste, M est une constante et S est la longueur de bits de mise en correspondance de l'au moins un élément de liste.

2. Procédé de création et de recherche de table selon la revendication 1, **caractérisé en ce que** l'étape pour calculer les valeurs d'indice de stockage comprend le calcul des valeurs d'indice de stockage par le biais d'un algorithme de mappage partiel, d'un algorithme de mappage total ou d'une fonction de hachage.

3. Procédé de création et de recherche de table selon la revendication 1, **caractérisé en ce que** l'étape de détermination de zones de stockage des éléments de liste selon les valeurs d'indice de stockage comprend : la détermination des zones de stockage selon les longueurs de bits de mise en correspondance des éléments de liste, et la détermination des positions de stockage des éléments de liste avec la même longueur de bits de mise en correspondance dans la même zone de stockage selon les valeurs de bits de mise en correspondance.

4. Procédé de création et de recherche de table selon la revendication 1, **caractérisé en ce que** l'étape pour calculer les valeurs d'indice d'éléments de liste correspondants comprend le calcul des valeurs d'indice d'éléments de liste correspondants par le biais d'un algorithme de mappage partiel, d'un algorithme de mappage total ou d'une fonction de hachage.

5. Procédé de création et de recherche de table selon la revendication 1, **caractérisé en ce que** les valeurs d'indice d'éléments de liste correspondants sont les longueurs de bits de mise en correspondance et les valeurs de bits de mise en correspondance des champs d'entrée, et la recherche d'éléments de liste avec la même valeur d'indice comprend : la détermination de zones de stockage des éléments de liste selon les longueurs de bits de mise en correspondance de champs d'entrée, et la détermination de positions de stockage des éléments de liste avec la même longueur de bits de mise en correspondance dans la même zone de stockage selon les valeurs de bits de mise en correspondance des champs d'entrée.

6. Procédé de création et de recherche de table selon la revendication 4, **caractérisé en ce que** les valeurs d'indice d'éléments de liste correspondants sont calculées avec l'équation suivante :

$$P=T/M+(Y-1)$$

> où P est une valeur d'indice d'au moins un élément de liste correspondant, T est la valeur binaire de mise en correspondance de l'au moins un champ d'entrée, M est une constante et Y est la longueur de bits de mise en correspondance de l'au moins un champ d'entrée.

7. Procédé de création et de recherche de table selon la revendication 1 ou 6, **caractérisé en ce que** la valeur de M est 1024.

Fig.1

Fig.2

Fig.3

## Table (the largest matching 16Bits)

Key1 ⇒
Key2 ⇒
Key3 ⇒
Key4 ⇒
Key5 ⇒
Key6

Key22 ⇒
Key23 ⇒
Key24

KeyN ⇒
KeyN+1 ⇒

Fig.4

Fig.5

**EP 2 429 132 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6061679 A
- US 6052683 A
- WO 0137495 A1
- US 6675163 B1
- EP 1113372 A2